# EUROPEAN PATENT SPECIFICATION

(11) **EP 4 204 316 B1**
(45) Date of publication and mention of the grant of the patent: **26.11.2025**
(21) Application number: 21752670.6
(22) Date of filing: 29.07.2021
(51) Int. Cl.: B65D 19/08, B66F 9/075, B66F 9/12, F17C 13/08, B65D 19/44

(54) **METALLIC PALLET WITH AN RFID TAG FOR TRANSPORTING GAS CYLINDERS, ARRANGEMENT AND METHOD THEREFOR.**
METALLISCHE PALETTE MIT RFID-ETIKETT ZUM TRANSPORT VON GASFLASCHEN, ANORDNUNG UND VERFAHREN DAFÜR.
PALETTE MÉTALLIQUE À ÉTIQUETTE RFID POUR LE TRANSPORT DE BOUTEILLES DE GAZ, AGENCEMENT ET PROCÉDÉ POUR CELLE-CI

(30) Priority: 25.08.2020 DE 102020122231
(43) Date of publication of application: 05.07.2023
(73) Proprietor: Air Liquide Deutschland GmbH, 40476 Düsseldorf (DE); L'Air Liquide, Société Anonyme pour l'Etude et l'Exploitation des Procédés Georges Claude, 75007 Paris (FR)
(72) Inventor: KREMER, Robert, 40235 Düsseldorf (DE)
(74) Representative: Air Liquide
(86) International application number: PCT/EP2021/071264
(87) International publication number: WO 2022/042992

(56) References cited:
- EP-B1- 2 431 323
- US-A1- 2011 253 590
- US-A1- 2012 125 238
- US-B2- 7 557 714
- US-B2- 7 839 276

## Description

The invention relates to a gas cylinder pallet, to an arrangement comprising such a pallet and a transport device, such as a forklift, and to a method for transporting gas cylinders.

Gas cylinders are routinely transported by means of gas cylinder pallets. However, the problem that often arises in this respect in relatively large warehouses is that of identifying the gas cylinder pallets. Many known methods for identifying gas cylinder pallets are inefficient because they require, for example, that a forklift driver has to climb down from the forklift. It is known practice from other logistics sectors to identify pallets using RFID. However, it has up until now been a failure in the case of gas cylinder pallets that the metallic gas cylinder pallets partially shield the RFID signals, in particular if a plurality of gas cylinder pallets are loaded together onto a long fork. This problem does not arise in the case of wooden pallets, the use of which, in logistics, is more widespread.

The document EP2431323B1 discloses an inventory management system with a pallet having a transponder arranged in the central region of the pallet.

It is an object of the present invention, proceeding from the prior art described, to provide a method by means of which gas cylinder pallets can be detected in an automated manner, in particular if a plurality of gas cylinder pallets are loaded together onto a long fork. Moreover, a corresponding gas cylinder pallet and a corresponding arrangement are intended to be presented.

These objects are achieved with the gas cylinder pallet, the arrangement and the method according to the independent claims. Further advantageous embodiments are specified in the dependent claims. The features illustrated in the claims and in the description are able to be combined with one another in any desired, technically expedient manner.

According to the invention, there is presented a gas cylinder pallet which comprises:
- a base,
- an attachment frame placed on the base,
- two receptacles arranged below the base and intended for a respective fork tine of a transport device, and
- an RFID tag arranged below the base between the receptacles,
wherein the gas cylinder pallet is at least 90% formed from metal.

What is to be understood by a gas cylinder pallet is a pallet which is intended and designed for transporting gas cylinders. A gas cylinder pallet can be transported in particular by a transport device having at least two fork tines. Such a transport device that comes into consideration is in particular a forklift, a pallet truck or a crane having a pallet fork. What will be discussed in particular by way of example in the following is the case of a forklift. The fork tines together form a fork which, in the case of a forklift, can be referred to as a forklift fork. When considered perpendicularly to the base, the gas cylinder pallet preferably has a rectangular cross section, in particular with an extent of 60 to 100 cm x 100 to 140 cm. The gas cylinder pallet is preferably dimensioned such that the transport device can simultaneously transport two gas cylinder pallets. The fork tines of the transport device are preferably dimensioned such that two of the gas cylinder pallets can be simultaneously loaded onto them.

The gas cylinders can be set onto the base of the gas cylinder pallet. Lateral support of the gas cylinders is provided by placing the attachment frame on the base. The gas cylinder pallet can, for example, be loaded by a transport device. For this purpose, the gas cylinder pallet has two receptacles. Each of the receptacles can be engaged by one of the respective fork tines. The receptacles are defined by the fact that the fork tines can engage in them in such a way that the gas cylinder pallet can be loaded and transported by the transport device. It is not required for the receptacles to be delimited on all sides or completely. It is sufficient for the position and extent of the receptacles to be able to be conceptually determined. It is also possible for the gas cylinder pallet to have a plurality of different pairs of receptacles which can also overlap. By way of example, it is possible for a plurality of feet to be arranged below the base of the gas cylinder pallet in such a way that receptacles for fork tines are formed in gaps between the feet. This allows the gas cylinder pallet to be loaded from different sides by the transport device, with correspondingly different receptacles being used.

The gas cylinder pallet additionally has the RFID tag, which is arranged below the base and between the receptacles. What is meant by "between the receptacles" is that there is at least one line which runs through the RFID tag and through both receptacles. RFID stands for "radio-frequency identification". It is possible by means of RFID for objects to be identified. In this respect, an object - here the gas cylinder pallet - is provided with an RFID tag. An RFID tag can also be referred to as an RFID transponder. An RFID tag contains an individual code which can be read by an RFID reading device. Such an RFID reading device comprises an antenna, which is referred to here as an RFID antenna.

The gas cylinder pallet is at least 90% formed from metal, preferably completely from metal. The metal is preferably steel. The gas cylinder pallet can also be referred to as a steel pallet for gas cylinders or as a gas cylinder steel pallet.

The material of the gas cylinder pallet shields electromagnetic signals, which, in principle, makes it harder to use, or even completely prevents the use of, RFID. However, the arrangement of the RFID tag below the base and between the receptacles allows a situation in which the RFID tag can be read via an RFID antenna on one or both fork tine(s). Thus, the RFID antenna can be brought into the vicinity of the RFID tag, with no metal between the RFID antenna and the RFID tag shielding the signals. The gas cylinder pallet described thus allows the use of RFID for identification in spite of the shielding effect of metal. Consequently, the gas cylinder pallet described can be identified in an automated manner.

It has been found, moreover, that the shielding effect of metal, which, in principle, is harmful for RFID, is also advantageous to the extent that the RFID antenna is shielded from interfering signals. In particular, the material of the gas cylinder pallet can prevent a situation in which the RFID antenna receives interfering signals from RFID tags of adjacent gas cylinder pallets.

Furthermore, it has been found that, in the case of the gas cylinder pallet described, the RFID antenna can be brought up particularly close to the RFID tag in order to read it. This reduces weather influences. It is also the case that arranging the RFID tag below the base makes it possible for the RFID tag to be particularly well protected from weather influences. If the RFID tag were arranged on the outside of the gas cylinder pallet, it would be possible for rainwater, ice and snow to make communication with the RFID antenna more difficult.

According to the invention, the RFID tag is arranged in a Faraday cage into which the fork tines can be inserted via the receptacles.

The Faraday cage is formed by part of the material of the gas cylinder pallet. It is not necessary for the Faraday cage to be closed on all sides and completely. It is sufficient for the Faraday cage to be designed to the extent that electromagnetic radiation from outside of the Faraday cage can penetrate into the Faraday cage only to such a weakened extent that it is able to be filtered out as an interfering signal. The RFID antenna is pushed into the Faraday cage by the fork tine. Therefore, the Faraday cage does not get in the way of the interaction between the RFID tag and the RFID antenna.

According to the invention, the RFID tag is arranged at least 30 cm distant from each lateral edge of the gas cylinder pallet.

What is to be understood by the lateral edges of the gas cylinder pallet are the edges of the gas cylinder pallet as viewed perpendicular to the base. Preferably, the RFID tag is arranged centrally when viewed perpendicular to the base. In that case, it is unimportant from which of the four sides of the gas cylinder pallet the fork tines are inserted into the receptacles. Slight deviations from a central position have only minor technical effects, however. Therefore, there is provision in the present embodiment that the RFID tag is arranged at least 30 cm distant from each lateral edge of the gas cylinder pallet. This applies particularly when the gas cylinder pallet has an extent in the range from 60 to 180 cm in each direction parallel to the base.

A further aspect of the invention that is presented is an arrangement which comprises a gas cylinder pallet formed as described and also a transport device having two fork tines. At least one of the fork tines has an RFID antenna, wherein the RFID tag of the gas cylinder pallet and the RFID antenna of the transport device are designed, by interaction with one another, to identify the gas cylinder pallet.

The particular advantages and configuration features of the gas cylinder pallet that have been described are applicable and transferable to the arrangement, and vice versa. The gas cylinder pallet described is preferably designed for use as part of the described arrangement.

The RFID antenna can be inserted into the receptacle by the fork tine and in this respect brought into the direct range of the RFID tag. The RFID tag and the RFID antenna can be brought into the immediate vicinity of one another. If the RFID antenna were, by way of example, arranged outside of the fork tines on a forklift, and if the RFID tag were arranged on the outside of the gas cylinder pallet, the distance between the RFID tag and the RFID antenna would be approximately 1.5 to 2 m. However, it is also possible for other gas cylinder pallets to be situated within this order of magnitude. By virtue of the gas cylinder pallet described, there can be achieved a considerably smaller distance between the RFID tag and the RFID antenna, with the result that this problem does not exist. In addition, it is possible for the RFID tag and the RFID antenna, on account of their arrangement, to interact with one another in spite of the metal of the gas cylinder pallet. This is also possible while the fork tine with the RFID antenna is moved past the RFID tag. It is thus possible, in particular while the gas cylinder pallet is being loaded, for the RFID tag to be identified.

In a preferred embodiment of the arrangement, the RFID antenna is arranged in a groove of the fork tine.

The RFID antenna is particularly well protected in this embodiment. In particular, the arrangement of the RFID antenna in a groove prevents a situation in which the RFID antenna is torn out from the fork tine. The groove can take the form of a top-positioned or frontally positioned groove on a structurally approved fork tine.

In a further preferred embodiment of the arrangement, the RFID antenna is arranged in one third of the fork tine that adjoins a tip of the fork tine.

The tip of the fork tine is the end of the fork tine that is inserted first of all into the receptacle of the gas cylinder pallet. If a forklift moves forwards, the tips of the fork tines are at the front in the direction of travel. In the present embodiment, the RFID antenna is thus arranged at the front in the direction of travel. This is particularly advantageous if a plurality of gas cylinder pallets are loaded in succession and simultaneously transported. This is possible, for example, by two gas cylinder pallets being loaded one behind the other onto a forklift fork, which is possible in particular with a so-called long fork. Here, the RFID antenna is first of all moved past the RFID tag of the gas cylinder pallet at the rear in the direction of travel of the forklift and then moved past the RFID tag of the gas cylinder pallet at the front in the direction of travel of the forklift. Both RFID tags can be read here. There is nothing preventing the RFID antenna, after loading and during transport, from being arranged only below the one of the two gas cylinder pallets. The RFID tag of the other gas cylinder pallet could have already been read during loading.

In a further preferred embodiment of the arrangement, the RFID antenna has an extent along the fork tine in the range from 30 to 80 cm.

What is to be understood by the extent of the RFID antenna along the fork tine is, for example, in the case of a forklift, the extent of the RFID antenna when viewed along the usual direction of travel of the forklift. It has been found that an extent in the stated range allows particularly reliable identification of the gas cylinder pallets.

A further aspect of the invention that is presented is a method for transporting gas cylinders by means of at least one gas cylinder pallet formed as described and by means of a transport device, wherein the transport device has two fork tines, wherein at least one of the fork tines has an RFID antenna, wherein the at least one gas cylinder pallet is identified by interaction of the RFID tag of the gas cylinder pallet and the RFID antenna of the transport device.

The particular advantages and configuration features of the gas cylinder pallet and of the arrangement that have been described are applicable and transferable to the method, and vice versa. The gas cylinder pallet that has been described and the arrangement that has been described are preferably designed for transporting gas cylinders according to the described method. The described method is preferably carried out by means of the described arrangement.

In a preferred embodiment of the method, two of the gas cylinder pallets are loaded in succession by the transport device and simultaneously transported.

The invention will be explained in more detail below with reference to the figures. The figures show a particularly preferred exemplary embodiment; however, the invention is not limited thereto. The figures and the size relationships presented therein are only schematic. In the figures:
- Fig. 1: shows a plan view of a first embodiment of an arrangement according to the invention,
- Fig. 2: shows a side view of the arrangement from Fig. 1 with gas cylinders,
- Fig. 3: shows a plan view of a second embodiment of an arrangement according to the invention.

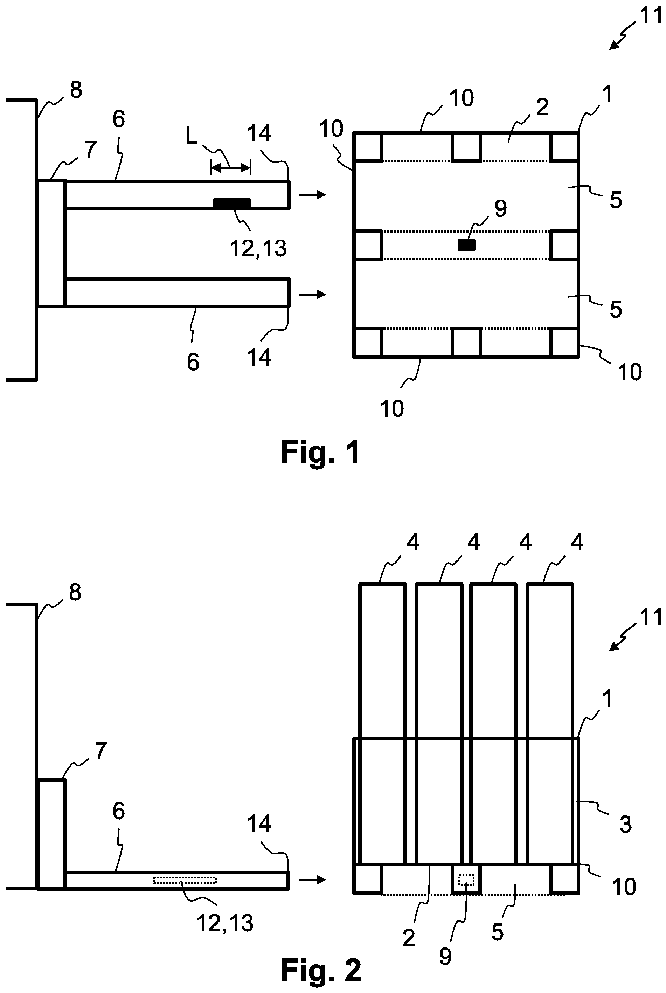

Figs. 1 and 2 show an arrangement 11 comprising a gas cylinder pallet 1 and an (only hinted-at) forklift as a transport device 8. The gas cylinder pallet 1 comprises a base 2 and an attachment frame 3 for gas cylinders 4 that (as is evident in Fig. 2) is placed on the base 2. Furthermore, the gas cylinder pallet 1 comprises two receptacles 5 arranged below the base 2 and intended for a respective fork tine 6 of the transport device 8. The transport device 8 has two such fork tines 6 which together form a forklift fork 7. The receptacles 5 are highlighted as broken lines in Fig. 1. The broken lines serve merely for illustration. Fig. 1 uses arrows to indicate that the fork tines 6 of the transport device 8 can be inserted from left to right into the receptacles 5. Alternatively, the transport device 8 could also load the gas cylinder pallet 1 from the side shown at the top or bottom in Fig. 1. For that case too, the gas cylinder pallet 1 that is shown has two receptacles; however, for the sake of clarity, they are not highlighted separately.

Furthermore, the gas cylinder pallet 1 has an RFID tag 9 arranged below the base 2 between the receptacles 5. One of the fork tines 6 of the transport device 8 has an RFID antenna 12. The RFID tag 9 of the gas cylinder pallet 1 and the RFID antenna 12 of the transport device 8 are designed, by interaction with one another, to identify the gas cylinder pallet 1. If the gas cylinder pallet 1 is loaded onto the forklift fork 7, the RFID antenna 12 is moved, within range, past the RFID tag 9. As a result, the gas cylinder pallet 1 can be identified upon loading.

The gas cylinder pallet 1 is at least 90% formed from metal. As a result, part of the material of the gas cylinder pallet 1 forms a Faraday cage within which the RFID tag 9 is arranged. In this respect, the RFID tag 9 is shielded by the material of the gas cylinder pallet 1. This allows the influence of interfering signals to be reduced. The fork tines 6 having the RFID antenna 12 can be inserted into the Faraday cage via the receptacles 5. As a result, an interaction between the RFID tag 9 and the RFID antenna 12 is possible in spite of shielding.

The RFID tag 9 is arranged at least 30 cm distant from each lateral edge 10 of the gas cylinder pallet 1. The lateral edges 10 of the gas cylinder pallet 1 are the edges of the gas cylinder pallet 1 when considered in the view shown in Fig. 1. In the embodiment that is shown, the RFID tag 9 is in each case arranged in the centre of two mutually opposite lateral edges 10.

The RFID antenna 12 is arranged in a groove 13 of the fork tine 6. The RFID antenna 12 has an extent L along the fork tine 6 (that is to say in the left-to-right direction in Fig. 1) in the range from 30 to 80 cm. The RFID antenna 12 is situated in the vicinity of a tip 14 of the fork tine 6. Thus, the RFID antenna 12 is arranged in one third of the fork tine 6 that adjoins the tip 14. Consequently, the RFID antenna 12 can also be used to identify gas cylinder pallets 1 if a plurality of gas cylinder pallets 1 are loaded in succession by the transport device 8 and transported simultaneously.

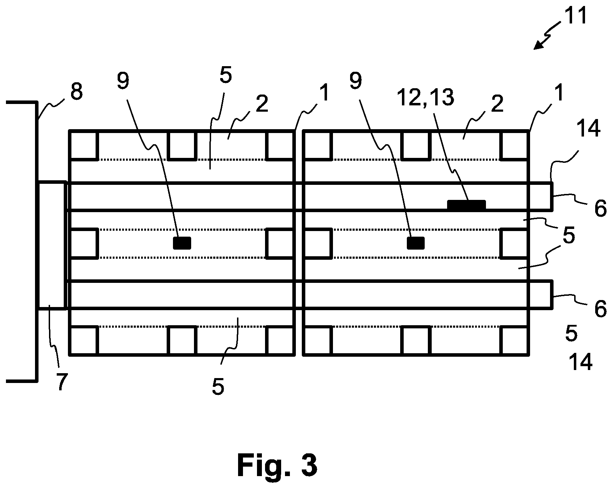

Fig. 3 shows an arrangement 11 which, by contrast with Figs. 1 and 2, has two gas cylinder pallets 1 which are loaded in succession onto the fork tines 6 and transported simultaneously.

The invention allows metallic gas cylinder pallets 1 to be identified in an automated manner by means of RFID. By arranging the RFID tag 9 between the receptacles 5 for the fork tines 6 of a transport device 8, such as a forklift 8, the RFID tag 9 is shielded from the surroundings and can nevertheless interact with an RFID antenna 12 in a fork tine 6. This applies in particular even when a plurality of gas cylinder pallets 1 are loaded together onto the forklift fork 7. Moreover, the RFID tag 9 and the RFID antenna 12 are arranged so as to be protected from weather influences.

### List of reference signs

- 1: Gas cylinder pallet
- 2: Base
- 3: Attachment frame
- 4: Gas cylinder
- 5: Receptacle
- 6: Fork tine
- 7: Forklift fork
- 8: Transport device
- 9: RFID tag
- 10: Lateral edge
- 11: Arrangement
- 12: RFID antenna
- 13: Groove
- 14: Tip

- L: Extent

## Claims

1. Gas cylinder pallet (1) comprising
- a base (2),
- an attachment frame (3) placed on the base (2),
- two receptacles (5) arranged below the base (2) and intended for a respective fork tine (6) of a transport device (8), and
wherein the gas cylinder pallet (1) is at least 90% formed from metal forming thus a Faraday cage and
wherein an RFID tag (9) is arranged below the base (2) and between the receptacles (5), and the RFID tag (9) is arranged in said Faraday cage into which the fork tines (6) can be inserted via the receptacles (5) and at least 30 cm distant from each lateral edge (10) of the gas cylinder pallet (1).

2. Arrangement (11) comprising a gas cylinder pallet (1) according to claim 1, and also a transport device (8) having two fork tines (6), wherein at least one of the fork tines (6) has an RFID antenna (12), and wherein the RFID tag (9) of the gas cylinder pallet (1) and the RFID antenna (12) of the transport device (8) are designed, by interaction with one another, to identify the gas cylinder pallet (1).

3. Arrangement (11) according to Claim 2,
wherein the RFID antenna (12) is arranged in a groove (13) of the fork tine (6).

4. Arrangement (11) according to Claim 2 or 3,
wherein the RFID antenna (12) is arranged in one third of the fork tine (6) that adjoins a tip (14) of the fork tine (6).

5. Arrangement (11) according to one of Claims 2-4,
wherein the RFID antenna (12) has an extent (L) along the fork tine (6) in the range from 30 to 80 cm.

6. Method for transporting gas cylinders (4) by means of at least one gas cylinder pallet (1) according to one of claim 1 and by means of a transport device (8) which has two fork tines (6), wherein at least one of the fork tines (6) has an RFID antenna (12), wherein the at least one gas cylinder pallet (1) is identified by interaction of the RFID tag (9) of the gas cylinder pallet (1) and the RFID antenna (12) of the transport device (8).

7. Method according to Claim 6,
wherein two of the gas cylinder pallets (1) are loaded in succession by the transport device (8) and transported simultaneously.

## Patentansprüche

1. Gasflaschenpalette (1), umfassend:
- eine Basis (2),
- einen auf der Basis (2) angeordneten Aufsatzrahmen (3),
- zwei unterhalb der Basis (2) angeordnete und für einen jeweiligen Gabelzinken (6) einer Transportvorrichtung (8) vorgesehene Aufnahmen (5), und
wobei die Gasflaschenpalette (1) zu mindestens 90 % aus Metall gebildet ist und so einen Faradayschen Käfig bildet, und wobei ein RFID-Tag (9) unterhalb der Basis (2) und zwischen den Aufnahmen (5) angeordnet ist, und das RFID-Tag (9) in dem besagten Faradayschen Käfig angeordnet ist, in den die Gabelzinken (6) über die Aufnahmen (5) eingeführt werden können, und mindestens 30 cm von jeder Seitenkante (10) der Gasflaschenpalette (1) entfernt ist.

2. Anordnung (11), umfassend eine Gasflaschenpalette (1) nach Anspruch 1 und auch eine Transportvorrichtung (8) mit zwei Gabelzinken (6), wobei mindestens einer der Gabelzinken (6) eine RFID-Antenne (12) aufweist, und wobei das RFID-Tag (9) der Gasflaschenpalette (1) und die RFID-Antenne (12) der Transportvorrichtung (8) durch Zusammenwirken miteinander dafür ausgelegt sind, die Gasflaschenpalette (1) zu identifizieren.

3. Anordnung (11) nach Anspruch 2, wobei die RFID-Antenne (12) in einer Nut (13) des Gabelzinkens (6) angeordnet ist.

4. Anordnung (11) nach Anspruch 2 oder 3, wobei die RFID-Antenne (12) in einem Drittel des Gabelzinkens (6) angeordnet ist, das an eine Spitze (14) des Gabelzinkens (6) angrenzt.

5. Anordnung (11) nach einem der Ansprüche 2-4, wobei die RFID-Antenne (12) eine Erstreckung (L) entlang des Gabelzinkens (6) im Bereich von 30 bis 80 cm aufweist.

6. Verfahren zum Transportieren von Gasflaschen (4) mittels mindestens einer Gasflaschenpalette (1) nach Anspruch 1 und mittels einer Transportvorrichtung (8), die zwei Gabelzinken (6) aufweist, wobei mindestens einer der Gabelzinken (6) eine RFID-Antenne (12) aufweist, wobei die mindestens eine Gasflaschenpalette (1) durch Zusammenwirken des RFID-Tags (9) der Gasflaschenpalette (1) und der RFID-Antenne (12) der Transportvorrichtung (8) identifiziert wird.

7. Verfahren nach Anspruch 6, wobei zwei der Gasflaschenpaletten (1) nacheinander von der Transportvorrichtung (8) geladen und gleichzeitig transportiert werden.

## Revendications

1. Palette (1) pour bouteilles de gaz comprenant :
- une base (2),
- un cadre de fixation (3) placé sur la base (2),
- deux logements (5) agencés sous la base (2) et destinés à une dent de fourche respective (6) d'un dispositif de transport (8), et
dans laquelle la palette (1) pour bouteilles de gaz est constituée à au moins 90 % de métal, formant ainsi une cage de Faraday, et dans laquelle une étiquette RFID (9) est agencée sous la base (2) et entre les logements (5), et l'étiquette RFID (9) est agencée dans ladite cage de Faraday, dans laquelle les dents de fourche (6) peuvent être insérées via les logements (5), et à au moins 30 cm de distance de chaque bord latéral (10) de la palette (1) pour bouteilles de gaz.

2. Agencement (11) comprenant une palette (1) pour bouteilles de gaz selon la revendication 1, et également un dispositif de transport (8) ayant deux dents de fourche (6), dans lequel au moins l'une des dents de fourche (6) a une antenne RFID (12), et dans lequel l'étiquette RFID (9) de la palette (1) pour bouteilles de gaz et l'antenne RFID (12) du dispositif de transport (8) sont conçues, par interaction l'une avec l'autre, pour identifier la palette (1) pour bouteilles de gaz.

3. Agencement (11) selon la revendication 2, dans lequel l'antenne RFID (12) est agencée dans une rainure (13) de la dent de fourche (6).

4. Agencement (11) selon la revendication 2 ou 3, dans lequel l'antenne RFID (12) est agencée dans un tiers de la dent de fourche (6) qui est adjacent à une pointe (14) de la dent de fourche (6).

5. Agencement (11) selon l'une des revendications 2 à 4, dans lequel l'antenne RFID (12) a une étendue (L) le long de la dent de fourche (6) dans la plage de 30 à 80 cm.

6. Procédé de transport de bouteilles de gaz (4) au moyen d'au moins une palette (1) pour bouteilles de gaz selon la revendication 1 et au moyen d'un dispositif de transport (8) qui a deux dents de fourche (6), dans lequel au moins l'une des dents de fourche (6) a une antenne RFID (12), dans lequel ladite au moins une palette (1) pour bouteilles de gaz est identifiée par interaction de l'étiquette RFID (9) de la palette (1) pour bouteilles de gaz et de l'antenne RFID (12) du dispositif de transport (8).

7. Procédé selon la revendication 6, dans lequel deux des palettes (1) pour bouteilles de gaz sont chargées successivement par le dispositif de transport (8) et transportées simultanément.
